Europäisches Patentamt

European Patent Office

Office européen des brevets

(11) Veröffentlichungsnummer: **0 269 944 B1**

## (12) EUROPÄISCHE PATENTSCHRIFT

(45) Veröffentlichungstag der Patentschrift: **19.02.92**

(21) Anmeldenummer: **87116916.5**

(22) Anmeldetag: **17.11.87**

(51) Int. Cl.⁵: **B65D 85/57**, B65D 85/672, G11B 23/027

(54) **Verpackung für Aufzeichnungsträger.**

(30) Priorität: **29.11.86 DE 8632020 U**

(43) Veröffentlichungstag der Anmeldung:
**08.06.88 Patentblatt 88/23**

(45) Bekanntmachung des Hinweises auf die
Patenterteilung:
**19.02.92 Patentblatt 92/08**

(84) Benannte Vertragsstaaten:
**CH DE FR GB IT LI**

(56) Entgegenhaltungen:
**FR-A- 1 369 019**
**US-A- 3 991 878**
**US-A- 4 122 945**

(73) Patentinhaber: **BASF Magnetics GmbH**
**Gottlieb-Daimler-Strasse 10**
**W-6800 Mannheim(DE)**

(72) Erfinder: **Thiele, Hartmut**
**Herterichstrasse 83**
**W-8000 München 71(DE)**

(74) Vertreter: **Münch, Volker et al**
**BASF Aktiengesellschaft Patentabteilung-C6**
**ZSP/A**
**W-6700 Ludwigshafen(DE)**

EP 0 269 944 B1

## Beschreibung

Die Erfindung betrifft einen aus zwei Teilen bestehenden Stützkern für einen Innenschieber zur Aufnahme eines auf einen Wickelkern oder eine Spule aufgewickelten Aufzeichnungsträgers und zum Einlegen des Innenschiebers in eine Schutzhülle, wobei der Innenschieber eine zentrale Öffnung besitzt, durch die als erster Teil des Stützkerns ein Ring anliegt, dessen Flansch an der Außenfläche des Innenschiebers anliegt und wobei die durch die Öffnung durchgreifende Zylinderfläche des Ringes in die Innenseite des zweiten hohlzylindrischen Teils des Stützkerns eingreift.

Unter Aufzeichnungsträgern werden dabei Bildfilme oder Magnetaufzeichnungsträger verstanden, beispielsweise Magnetfilme oder Magnetbänder.

Magnetbänder werden auf flanschlosen Wickelkernen, beispielsweise gemäß DIN 45 515, DIN 66 209 oder DE-PS 24 48 853 oder auf Flanschspulen gemäß DIN 45 517 aufgewickelt in den Handel gebracht. Studio-Magnetbänder, welche in verschiedenen Längen vertrieben werden, werden vorzugsweise auf flanschlose Wickelkerne aufgespult, welche anschließend in einen Innenschieber gesteckt werden. Der Innenschieber, welcher im allgemeinen aus Karton besteht und dessen Seitenteile mehrfach aufgefaltete Klappen oder Laschen enthalten, wie in dem DE-GM 73 36 057 beschrieben, besitzt in der Mitte einen Stützkern, auf dessen Umfang der Wickelkern oder die Spule aufgesteckt wird. Auf diese Weise ist der auf dem Wickelkern befindliche Aufzeichnungsträger fixiert und gegen Beschädigungen geschützt. Zum Transport sowie zur Archivierung steckt der Innenschieber seinerseits in einer Schutzhülle, beispielsweise in einer Schiebeschachtel, wie sie aus dem DE-GM 85 09 846 bekannt ist.

Aus der FR 1 369 019 ist ein Stützkern für einen Innenschieber gemäß dem ersten Teil (Oberbegriff) des Anspruchs 1. Er ist aus zwei Teilen zusammengesetzt, welche aus dünnem verformbaren Metall bestehen. Der von der Außenseite des Innenschiebers aus aufsteckbare Teil ist ein zylindrischer Ring mit einem Flansch, wobei der Zylinder durch eine zentrale Öffnung des Innenschiebers durchgesteckt und mit einem Hohlzylinder zusammengesteckt wird, dessen dem Innenschieber zugekehrte Seite ebenfalls einen Flansch besitzt, der beim Zusammenpressen in den Innenschieber eingedrückt und mit eingedrückten Kerben unverdrehbar fixiert wird. Durch ein Loch an der Endfläche des Hohlzylinders kann die Luft beim Zusammendrücken beider Teile entweichen.

Der zylindrisch geformte Stützkern ist im allgemeinen einteilig ausgeführt und besteht aus Kunststoff, beispielsweise aus Polystyrol. Er hat an einem Ende einen Seitenflansch, welcher als Anschlag beziehungsweise Auflagefläche dient, wenn er von der Außenseite des Innenschiebers in dessen zentrische kreisförmige Ausnehmung eingesteckt wird. An der Stelle, an der der Stützkern im Innenschieberkarton steckt, kann eine ringförmige Führungsrille im Stützkern unmittelbar benachbart dem Seitenflansch vorgesehen sein. Bei dem geschilderten Aufbau des Innenschiebers kommt es häufig vor, daß sich dieser bei seinem Einschieben in die Schutzhülle verhakt, da der Seitenflansch des Stützkerns auf der Innenseite des Innenschiebers keine Gegenstütze hat und so vom Karton absteht, wenn sich dieser beim Greifen und Einschieben auch nur etwas durchbiegt.

Daher bestand die Aufgabe, einen Stützkern für den Innenschieber zu finden, der nicht den genannten Nachteil aufweist.

Erfindungsgemäß wurde die Aufgabe gelöst durch einen Stützkern mit den im Anspruch 1 genannten kennzeichnenden Merkmalen. Nähere Einzelheiten, die sich auf besondere Ausführungsarten der Erfindung beziehen, gehen aus dem abhängigen Anspruch 2 hervor.

Ein Weg zur Ausführung der Erfindung wird nun anhand von Zeichnungen näher erläutert und zwar zeigt

| | |
|---|---|
| Figur 1a | einen Querschnitt durch eine besonders bevorzugte Ausführung des Stützkerns für den Innenschieber |
| Figur 1b | einen Ausschnitt aus Figur 1a mit einer anderen Ausführung des Stützkerns |
| Figur 2 | eine perspektivische Darstellung eines zweiteiligen neuerungsgemäßen Stützkerns gemäß Figur 1 samt Innenschieber im getrennten Zustand der Teile. |

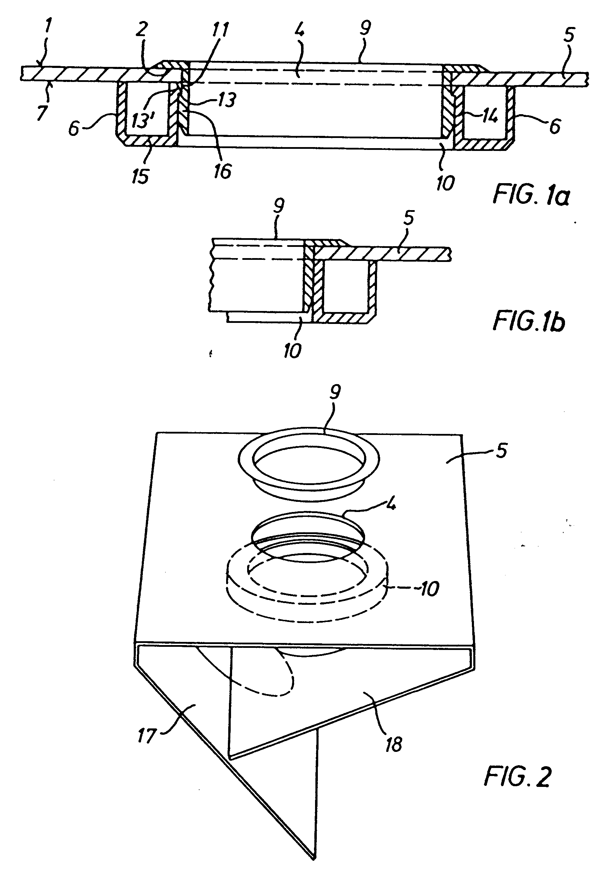

Figur 1a zeigt den in die zentrale Ausnehmung (4) des Innenschiebers (5) hineingesteckten Stützkern (9, 10), auf dessen zylindrischer Außenfläche (6) der (nicht gezeichnete) Wickelkern eines Aufzeichnungsträgers aufgesteckt wird. Es ist für die Erfindung wesentlich, daß die an der Außenseite (1) des Innenschiebers anliegende Auflagefläche (2) des Stützkerns gleich oder bevorzugt kleiner ist als die an der Innenfläche (7) anliegende Auflagefläche (6) des Stützkerns.

Auf diese Weise wird, da die innere Stützfläche (6) ein Aufwölben der Ränder der äußeren Auflagefläche (2) des Stützkerns verhindert, das eingangs beschriebene Verhaken des Innenschiebers beim Einlegen in die Schutzhülle wirksam vermieden, wozu noch die aus dem Stand der Technik bekannte Abschrägung der Kante der äußeren Auflagefläche (2) des Stützkerns mitwirkt.

Der Stützkern ist zweiteilig ausgeführt, wobei, wie aus Figur 2 zu erkennen, je ein Teil von der Außen- beziehungsweise Innenseite des Innenschiebers eingeführt und einrastend zusammengesteckt wird. Wie in Figur 1a dargestellt, entspricht der von der Außenseite des Innenschiebers aus einzuführende Teil (9) des Stützkerns in einigen Merkmalen dem eingangs geschilderten Stand der Technik. Er enthält an der Außenseite der zylindrischen Wand (16) eine Führungsrille (11) für den Innenschieberkarton, in dessen Ausnehmung (4) er eingeschoben wird, so daß die Auflagefläche (2) an der Außenseite des Innenschiebers anliegt. Von der Innenseite des Innenschiebers aus wird der doppelwandige Zylinder (10) aufgelegt, dessen äußere Hand (6) und dessen innere Wand (14) durch eine kreisringförmige Rippe (15) verbunden sind und der mit den offenen Enden beider Wände an der Innenseite des Innenschiebers anliegt. Durch zueinander komplementäre Verhakungselemente (13, 13'), welche in Gestalt von Vorsprüngen sowohl an der inneren Seite der Wand (14) des Teils (10) als auch an der Außenseite der Wand (16) des Teils (9) ausgebildet sind, rasten beide Teile im zusammengesteckten Zustand ein und sind praktisch unlösbar miteinander verbunden. Die beiden Teile (9, 10) können auch miteinander verklebt oder kraftschlüssig verbunden sein, wie in Figur 1b angedeutet.

Die innere und die äußere Wand des doppelwandigen Zylinders (Teil 10) besorgen die Gegenstütze zur Auflagefläche (2) des Teils (9) des Stützkerns und verhindern somit das Verhaken des Innenschiebers bei dessen Einschieben in die (nicht gezeichnete) Schutzhülle. Auf die Umfangsfläche der Hand (6) wird, wie bereits geschildert, der den Aufzeichnungsträger enthaltende Wickelkern aufgesteckt, der dann von den aufgefalteten Seitenlaschen (17, 18) des Innenschiebers (5) aufgenommen wird.

Der zweiteilige Stützkern, welcher außerordentlich einfach durch Gießen oder Spritzen herstellbar ist und auch einfach zusammensteckbar ist, kann selbstverständlich auch eine andere Form als in Figur 1 dargestellt haben; beispielsweise kann der Raum zwischen den Wänden (6) und (14) auch ausgefüllt sein, oder die Wand (14) des Teils 10 kann an der Innenseite der Wand (16) des Teils 9 einrastbar anliegen.

In jedem Fall ermöglicht der erfindungsgemäße Stützkern ein bequemes Handling des Innenschiebers beim Einschieben in die Schutzhülle.

**Patentansprüche**

1. Aus einem ersten (9) und zweiten (10) Teil bestehender Stützkern für einen Innenschieber (5), welcher einen aufgespulten Bild- oder Tonaufzeichnungsträger aufnimmt, wobei der Stützkern mit seiner einen Seite mit einer kreisringförmigen Auflagefläche (2) an der Außenseite des Innenschiebers (5) anliegt, wobei auf die andere zylindrische Seite (6) des Stützkerns eine ein den Aufzeichnungsträger tragender Wickelkern oder eine Flanschspule aufgesteckt werden kann und wobei der Innenschieber (5) in eine Schutzhülle einschiebbar ist, wobei der erste, von der Außenseite des Innenschiebers aus aufsteckbare Teil (9) aus einer auf der Auflagefläche (2) und einer durch die Ausnehmung (4) des Innenschiebers durchgreifenden zylindrischen Wand (16) besteht, dadurch gekennzeichnet daß der zweite, von der Innenseite des Innenschiebers aus aufsteckbarer Teil (10) ein doppelwandiger Zylinder ist, dessen Wände aüßere und innere (6,14) durch eine kreisringförmige Rippe (15) miteinander verbunden sind, wobei die offenen Enden der Wände (6, 14) an der Innenseite (7) des Innenschiebers (5) anliegen, wobei die innere Wand (14) an der zylindrischen Wand (16) des ersten Teils (9) anliegt wobei der Aufzeichnungsträger auf der äußeren Wand (6) aufsteckbar ist und wobei der Ringdurchmesser der an der Innenseite (7) des Innenschiebers anliegenden äußeren Wand (6) des Stützkerns gleich oder größer als der Ringdurchmesser der an der Außenseite (1) des Innenschiebers anliegenden Auflagefläche (2) des Stützkerns ist.

2. Stützkern nach Anspruch 1, dadurch gekennzeichnet, daß der erste Teil (9) an der Außenseite seiner zylindrischen Wand (16) einen Vorsprung (13) besitzt, welcher in einen an der Innenseite der inneren Wand (14) des zweiten Teils (10) vorgesehenen Vorsprung (13') einrastet.

**Claims**

1. A supporting core, comprising a first part (9) and second part (10), for an inner case (5), which accommodates a wound-up picture or sound recording medium, the supporting core bearing with its one side, having an annular bearing face (2), against the outside of the inner case (5), the other cylindrical side (6) of the supporting core being adapted for a hub or flanged reel, bearing a recording medium, to be fitted onto it, and the inner case (5) being adapted to slide into a protective sleeve, the first part (9), which can be fitted on from the outside of the inner case, comprising a cylindrical wall (16) on the bearing face (2) and extending through the recess (4) of the inner case, wherein the second part (10), which can be fitted on from the inside of the inner case, is a double-walled cylinder, the outer and inner walls (6, 14) of which are connected to each other by an annular rib (15), the open ends of the walls (6, 14) bearing against the inside (7) of the inner case (5), the inner wall (14) bearing against the cylindrical wall (16) of the first part (9), the recording medium being adapted to fit onto the outer wall (6), and the ring diameter of the outer wall (6) of the supporting core, bearing against the inside (7) of the inner case, being equal to or greater than the ring diameter of the bearing face (2) of the supporting core, bearing against the outside (1) of the inner case.

2. The supporting core as claimed in claim 1, wherein the first part (9) has on the outside of its cylindrical wall (16) a projection (13) which snaps into a projection (13') provided on the inside of the inner wall (14) of the second part (10).

**Revendications**

1. Noyau de support constitué d'une première partie (9) et d'une deuxième partie (10) pour un tiroir intérieur (5) qui reçoit un support d'enregistrement d'images ou sonore enroulé, ce noyau de support s'appuyant par un côté, par une surface d'appui en forme de couronne circulaire (2), sur la face extérieure du tiroir intérieur (5), sur l'autre côté, cylindrique (6) du noyau de support pouvant être mis un noyau d'enroulement portant le support d'enregistrement, ou une bobine à flasques, et le tiroir intérieur (5) pouvant être introduit dans une enveloppe protectrice, la première partie (9), se mettant depuis le côté extérieur du tiroir intérieur, étant constituée d'une surface d'appui (2) et d'une paroi cylindrique (16) passant à travers l'évidement (4) du tiroir intérieur, caractérisé par le fait que la deuxième partie (10), se mettant depuis le côté intérieur du tiroir intérieur, est un cylindre à double paroi dont les parois extérieure et intérieure (6, 14) sont réunies par une nervure en forme de couronne circulaire (15), les extrémités libres de ces parois (6, 14) s'appuyant sur la face intérieure (7) du tiroir intérieur (5), la paroi intérieure (14) s'appuyant sur la paroi cylindrique (16) de la première partie (9), le support d'enregistrement pouvant être mis sur la paroi extérieure (6), et le diamètre d'anneau de la paroi extérieure (6) du noyau de support appuyée sur la face intérieure (7) du tiroir intérieur étant égal ou supérieur au diamètre d'anneau de la surface d'appui (2) du noyau de support appuyée sur la face extérieure (1) du tiroir intérieur.

2. Noyau de support selon la revendication 1, caractérisé par le fait que la première partie (9) a sur la face extérieure de sa paroi cylindrique (16) une saillie (13) qui s'enclenche dans une saillie (13') prévue sur la face intérieure (14) de la deuxième partie (10).

FIG.1a

FIG.1b

FIG.2